# EUROPÄISCHE PATENTSCHRIFT

(11) **EP 0 685 122 B1**
(45) Veröffentlichungstag und Bekanntmachung des Hinweises auf die Patenterteilung: **16.10.1996**
(21) Anmeldenummer: 94903732.9
(22) Anmeldetag: 03.01.1994
(51) Int. Cl.: H02K 7/10, B60K 6/02

(54) **ELEKTRISCHE MASCHINE MIT MINDESTENS EINER KUPPLUNG**
ELECTRIC MACHINE WITH AT LEAST ONE CLUTCH
MACHINE ELECTRIQUE COMPORTANT AU MOINS UN EMBRAYAGE

(30) Priorität: 19.02.1993 DE 4305533; 25.05.1993 DE 4318949
(43) Veröffentlichungstag der Anmeldung: 06.12.1995
(73) Patentinhaber: FICHTEL & SACHS AG, D-97424 Schweinfurt (DE)
(72) Erfinder: SCHIEBOLD, Stefan, D-97421 Schweinfurt (DE); THIELER, Wolfgang, D-97437 Hassfurt (DE)
(74) Vertreter: Meissner, Peter E., Dipl.-Ing.
(86) Internationale Anmeldenummer: DE9400006
(87) Internationale Veröffentlichungsnummer: WO9419856

(56) Entgegenhaltungen:
- DE-A- 3 230 121
- DE-A- 3 338 548

## Beschreibung

Die Erfindung betrifft eine elektrische Maschine mit mindestens einer integrierten Kupplung gemäß dem Oberbegriff des Patentanspruchs 1.

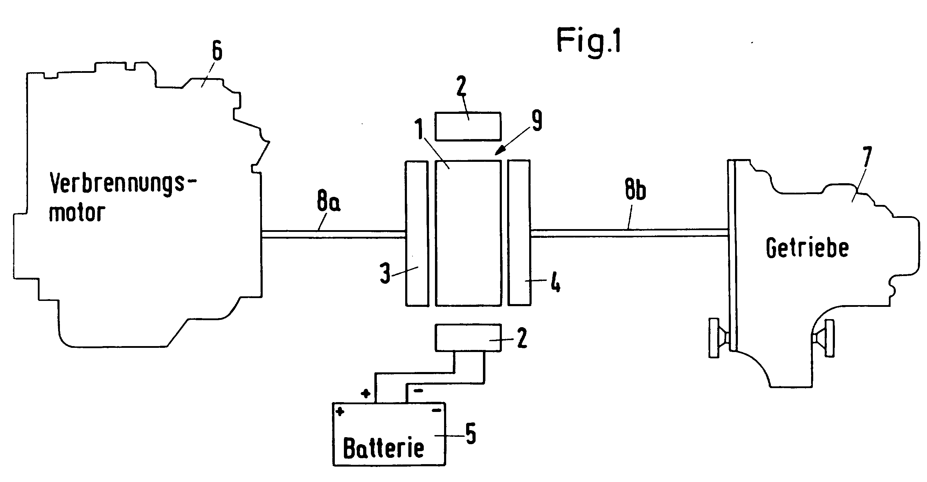

Im Zusammenhang mit den Bemühungen zur Verminderung des spezifischen Kraftstoffverbrauchs von Kraftfahrzeugen ist ein Fahrzeug mit Hybridantrieb bekanntgeworden, das einen Verbrennungsmotor und einen herkömmlichen mechanischen Antriebsstrang mit Schaltgetriebe aufweist, wie dies schematisch in Figur 1 dargestellt ist. Zwischen Verbrennungsmotor 6 und Getriebe 7 ist eine elektrische Maschine angeordnet, die als Rsynchronmaschine ausgebildet und wahlweise als Elektromotor (für den Fahrzeugantrieb oder zum Anlassen des Verbrennungsmotors 6) oder als elektrischer Generator betreibbar ist. In axialer Richtung gesehen sind außen an den einander gegenüberliegenden Seiten des innenliegenden Rotors 1 dieser elektrischen Maschine zwei schaltbare Kupplungen 3,4 zur Drehmomentübertragung angeordnet. Der Stator 2 dieser elektrischen Maschine liegt radial außen und ist leitungsmäßig mit einer elektrischen Batterie 5 zur übertragung von Antriebsenergie verbindbar.

Der Rotor 1 hat eine Doppelfunktion, da er auch als Schwungscheibe für den Verbrennungsmotor 6 arbeitet. Zu diesem Zweck wird in entsprechenden Betriebsphasen die dem Verbrennungsmotor 6 zugewandte Kupplung 3 der elektrischen Maschine eingeschaltet, so daß zwischen der Kurbelwelle 8a des Verbrennungsmotors 6 und dem Rotor 1 eine drehfeste Verbindung besteht. Um mechanische Antriebsenergie über die Welle 8b zum Getriebe 7 hin zu übertragen, wird auch die Kupplung 4 eingeschaltet. In Betriebsphasen, in denen ein rein elektrischer Antrieb durch Entnahme von Strom aus der Batterie 5 erfolgen soll, wird die dem Verbrennungsmotor 6 zugewandte Kupplung 3 geöffnet und allein die andere Kupplung 4 eingeschaltet. Dieser Schaltzustand der Kupplungen 3,4 kann auch in Phasen bestehen, in denen das Fahrzeug abgebremst wird, indem die elektrische Maschine als Generator betrieben und die Batterie 5 dabei geladen wird. Zur Verstärkung des Bremseffektes kann dabei aber auch die erste Kupplung 3 eingeschaltet werden, so daß der Verbrennungsmotor 6 ebenfalls bremsend wirkt.

Durch das direkte Anflanschen der Kupplungen 3,4 an die Stirnseiten des Rotors 1 wird bereits eine relativ kompakte Bauweise erreicht. Ein Nachteil dieser bekannten Lösung liegt insbesondere darin, daß die Leistung und das maximale Drehmoment der elektrischen Maschine erheblich kleiner ist als die entsprechenden Werte des Verbrennungsmotors 6. Dieser Hybridantrieb läßt daher in Phasen des rein elektrischen Betriebs nur sehr bescheidene Fahrleistungen zu. Zur Ableitung der in Wärme umgewandelten Verlustleistung ist eine Gebläsekühlung vorgesehen.

Aus der DE 32 30 121 ist bereits ein Außenläufer-Elektromotor mit zu- und abführender Kupplung zwischen Verbrennungsmotor und Getriebe bekannt, wobei der Motor auf einer gegenüber dem Stator radial äußeren Ebene angeordnet ist.

Aufgabe der Erfindung ist es, eine gattungsgemäße elektrische Maschine dahingehend zu verbessern, daß sie bei in axialer Richtung möglichst noch kompakterer Bauweise ein wesentlich höheres Drehmoment und eine höhere Leistungsdichte ermöglicht und dabei eine hohe Funktionssicherheit gewährleistet.

Gelöst wird diese Aufgabe durch die kennzeichnenden Merkmale des Patentanspruches 1. Vorteilhafte Weiterbildungen der Erfindung sind in den Unteransprüchen 2 bis 12 angegeben.

Anhand der Figuren wird die Erfindung nachfolgend näher erläutert.

Es zeigen:
- Figur 1: ein Antriebsschema für einen bekannten Hybridantrieb,
- Figur 2: ein Antriebsschema für einen Hybridantrieb mit erfindungsgemäßer elektrischer Maschine,
- Figur 3: eine abgewandelte Ausführung der elektrischen Maschine gemäß Figur 2 und
- Figur 4: einen Detailausschnitt aus einem Rotor der erfindungsgemäßen elektrischen Maschine.

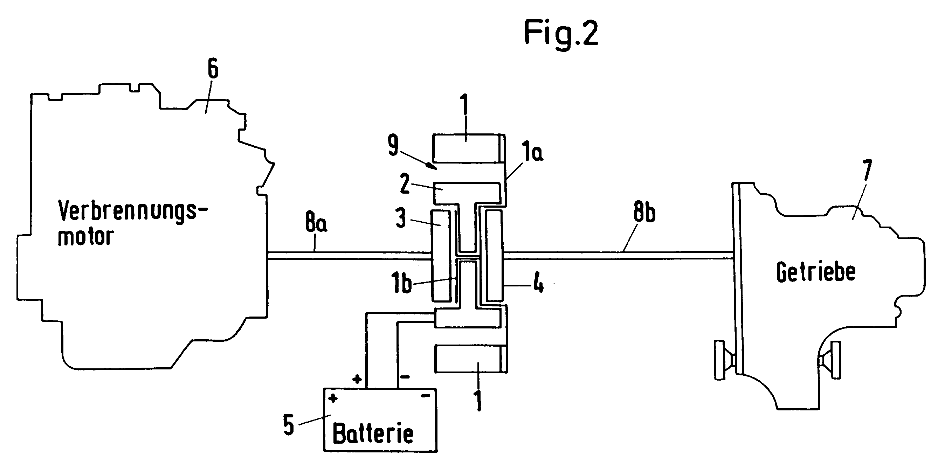

Die Funktionsweise des bekannten Hybridantriebs gemäß Figur 1 wurde eingangs bereits im einzelnen erläutert. Das in Figur 2 dargestellte Antriebsschema arbeitet im Grundsatz weitgehend gleich, so daß nachfolgend im wesentlichen nur auf die Unterschiede näher eingegangen wird. Funktionsgleiche Teile sind in den Figuren 2 - 4 jeweils mit denselben Bezugszeichen versehen wie io Figur 1.

Im Unterschied zu Figur 1 ist die wahlweise als Elektromotor oder als elektrischer Generator betreibbare elektrische Maschine gemäß Figur 2 als Außenläufermaschine ausgebildet, weist also einen außenliegenden Rotor 1 von im wesentlichen zylindrischer Form auf. Es handelt sich um eine Synchronmaschine mit elektronischer Kommutierung. Im Inneren des Rotors 1 ist der Stator 2 angeordnet, der mit nicht einzeln dargestellten elektrischen Wicklungen bestückt ist. Der Rotor 1 ist in entsprechender Weise mit Permanentmagneten bestückt. Die elektronische Kommutierung für die Stromversorgung des Stators 2 ist nicht gesondert dargestellt. Zwischen den beiden Funktionsteilen (Rotor 1, Stator 2) des Elektromotors verbleibt ein zylindermantelförmiger Luftspalt 9. Diese Bauweise erlaubt sehr hohe Drehmomente, da der Luftspalt 9 sehr weit nach außen verlagert werden kann. Der Rotor 1 weist ähnlich einem Fahrzeugrad ein im Querschnitt teilweise schüsselartig eingezogenes Nabenteil 1a auf, das in dem Stator 2 gelagert ist und ein Funktionsteil der schaltbaren Kupplung 4 selbst bildet oder mit diesem Funktionsteil fest verbunden ist. Das andere Funktionsteil der Kupplung 4 ist mit der zum Getriebe 7 führenden Welle 8b verbunden. Die Kupplung 4 ist in das Nabenteil la des Rotors 1 von außen koaxial eingelassen und liegt damit gleichzeitig auch innerhalb des Stators 2. Vorzugsweise ragt die Kupplung 4 nicht oder nur unwesentlich über die stirnseitige Begrenzungsfläche der Kontur des Stators 2 und entsprechend auch des Rotors 1 hinaus. Dadurch wird in axialer Richtung eine äußerst kompakte Bauweise gewährleistet. Für viele Anwendungsfälle ist es vorteilhaft, in der Kupplung (nicht dargestellte) Einrichtungen zur Drehschwingungsdämpfung vorzusehen.

Die Bestückung der elektrischen Maschine mit lediglich einer Kupplung stellt bereits eine für manche Anwendungsfälle brauchbare Ausführungsform der Erfindung dar. In Fällen, die wie das Beispiel des Hybridantriebs gemäß Figur 2 eine zweite Kupplung (Kupplung 3) erfordern, wird auch diese in entsprechender Weise innerhalb des Stators 2 untergebracht. Zu diesem Zweck ist mit dem Nabenteil 1a des Rotors 1 ein zweites Nabenteil 1b verbunden, das gleichzeitig ein Funktionsteil der schaltbaren Kupplung 3 bildet oder aber mit einem Funktionsteil der Kupplung 3 fest verbunden ist. Das zweite Funktionsteil der Kupplung 3 ist drehfest mit der Kurbelwelle 8a verbunden. Beide Kupplungen 3,4 sind vorzugsweise vollständig in das Volumen des Stators 2 bzw. des Rotors 1 eingelassen, so daß die axiale Baulänge extrem kurz gehalten werden kann.

Als Kupplungen 3,4 eignen sich unterschiedliche Typen, wie beispielsweise Lamellenkupplungen oder hydraulisch oder pneumatisch betätigte Trockenkupplungen. Besonders vorteilhaft ist der Einsatz elektrisch betätigter Magnetpulverkupplungen. Unabhängig von der Art der Kupplung empfiehlt es sich, das Ein- und Ausschalten automatisiert durchzuführen.

Die Bauweise als Außenläufermaschine mit Permanentmagneterregung gewährleistet hohe Drehmomente und hohe Leistung bei vergleichsweise sehr kompakten Abmessungen. Außerdem kann der Rotor 1 in bekannter Weise als Schwungscheibe für den Verbrennungsmotor 6 genutzt werden, wobei die Schwungmasse erheblich besser zur Wirkung kommt als beim Stand der Technik, da sie auf einem Zylindermantel mit größerem Radius angeordnet ist. Zur Ableitung der durch die Verlustleistung in den Wicklungen des Stators 2 entstehenden Wärme wird zweckmäßigerweise eine Flüssigkeitskühlung (nicht dargestellt) vorgesehen, die im Vergleich zu einer Luftkühlung effektiver arbeitet und eine kompaktere Bauweise erlaubt.

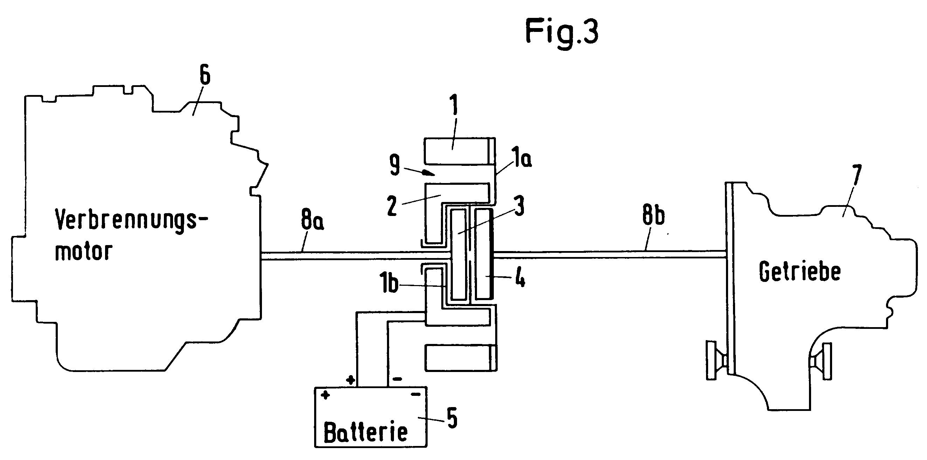

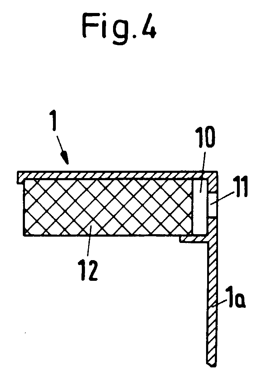

Eine gegenüber der Fig. 2 abgewandelte Ausführungsform der Erfindung mit wiederum zwei Kupplungen 3, 4 ist in Fig. 3 dargestellt. Hierbei sind die Kupplungen 3, 4 axial unmittelbar hintereinander angeordnet und sind beide von derselben Seite in den Stator 2 eingelassen, der hier eine topfartige Gehäuseform aufweist. Diese Bauweise, die in ihrer grundsätzlichen Funktion völlig derjenigen gemäß Fig. 2 entspricht, hat den großen Vorteil, daß die Betätigungsorgane für die Kupplungen von der Getriebeseite her angeschlossen werden können und ein unmittelbares Anflanschen an die Motorkurbelwelle ohne Belassung eines axialen Zwischenraums möglich ist. Der Luftspalt 9 wird an der dem Getriebe 7 zugewandten Seite von dem gehäuseartigen Nabenteil la abgedichtet übergriffen. Dadurch kann staubförmiger Abrieb von den Kupplungen 3, 4, der unter Umständen ferromagnetische Bestandteile enthalten könnte, nicht einfach zu den Permanentmagneten des Rotors 1 gelangen und sich dort im Bereich des Luftspaltes 9 ablagern und ggf. zu Störungen führen. Er müßte schon um das Rotorgehäuse außen herumwandern, um auf der dem Verbrennungsmotor 6 zugewandten Seite in den Luftspalt 9 einzudringen. Um in dieser Hinsicht im Bedarfsfall eine noch größere Sicherheit gegen Störungen zu erlangen, kann es zweckmäßig sein, wie in Fig. 4 dargestellt, zwischen den Permanentmagneten 12 und dem Nabenteil 1a einen gegenüber dem Luftspalt 9 abgedichteten ringförmigen Sammelraum 10 zu schaffen, der durch mehrere öffnungen 11 in dem Nabenteil 1a an der dem Getriebe 7 zugewandten Seite zugänglich ist und in mehrere separate Sammelräume unterteilt sein kann. Wenn nun ferromagnetischer Abrieb aus den Kupplungen 3, 4 an der Getriebeseite nach außen austreten sollte, müßte dieser an dem Nabenteil la entlang nach außen wandern. Bevor er den Außenumfang erreicht hat, würde er die öffnungen 11 passieren müssen und würde dabei durch die Permanentmagnete 12 gleichsam "angesaugt" und in dem Sammelraum 10 magnetisch festgehalten, ohne daß Schaden entstehen könnte.

Die Ausführungsform der Erfindung mit permanenterregter Synchronmaschine hat noch einen weiteren wichtigen Vorteil gegenüber der bekannten Ausführung mit Asynchronmaschine. Letztere sind sehr empfindlich gegen Veränderungen des Luftspalts, der im Bereich 0,1 - 0,2 mm liegen muß, um eine effektive Wirkungsweise zu gewährleisten. Im Falle von Abweichungen ist mit erheblichen Wirkungsgradeinbußen zu rechnen. Dies führt dazu, daß Asynchronmaschinen (bei direkter Anflanschung an die Kurbelwelle) sehr empfindlich sind gegenüber dem jeweils vorliegenden Kurbelwellenspiel des Verbrennungsmotors. Wenn hohe Wirkungsgrade gewährleistet werden sollen, müssen daher aufwendige Zusatzmaßnahmen für eine Lagerung mit entsprechend engen Toleranzen getroffen werden. Im Falle des Einsatzes von Synchronmaschinen ist ein solcher Zusatzaufwand dagegen nicht erforderlich.

Die Vorteile der Erfindung werden durch die nachfolgenden Beispiele weiter verdeutlicht.

### Vergleichsbeispiel:

Ein Fahrzeug mit Hybridantrieb gemäß Figur 1 weist als Antriebsaggregat einen Dieselmotor von 55 kW Leistung mit einem maximalen Drehmoment von 110 Nm auf. Der Durchmesser der elektrischen Asynchronmaschine (Motor/Generator) beträgt etwa 250 mm und die axiale Baulänge ca. 85 mm. Bei diesen Abmessungen liegt die elektrische Leistung (2000 min⁻¹) bei 7,5 kW und das maximale Dauerdrehmoment beträgt ca. 80 Nm. Für den rein elektrischen Fahrbetrieb resultieren daraus entsprechend bescheidene Fahrleistungen im Vergleich zum Verbrennungsmotorbetrieb (Leistung max. 14 %, Drehmoment max. 73 %).

### Erfindung:

Unter Zugrundelegung desselben Verbrennungsmotors hat eine zweckmässige Ausführungsform der Erfindung gemäß Figur 3 eine elektrische Synchronmaschine mit Permanentmagneterregung und mit einem Durchmesser von 320 mm und einer axialen Baulänge von 147 mm. Die maximale Leistung (1800 min⁻¹) beträgt 25 kW und das maximale Drehmoment 400 Nm. Im Vergleich zum Beispiel gemäß Figur 1 liegt die Leistung also um 230 % und das Maximaldrehmoment sogar um 400 % höher, obwohl die Abmessung der Maschine nur vergleichsweise wenig angewachsen sind (Durchmesser um 28 %, Baulänge um 73 %). Hinzu kommt als Vorteil die verbesserte Schwungradwirkung für den Verbrennungsmotor aufgrund der Außenläuferbauweise. Insbesondere der erhebliche Zuwachs des Drehmoments bringt wesentliche Vorteile mit sich, wenn der Elektromotor als Anlasser für den Verbrennungsmotor arbeiten soll.

## Patentansprüche

1. Elektrische Maschine, die wahlweise als Motor und als Generator betreibbar und insbesondere in den Antriebsstrang eines Kraftfahrzeuges mit Hybridantrieb einbaubar ist, mit einem Stator (2) und einem Rotor (1) von im wesentlichen zylindrischer Form und einem zwischen Stator (2) und Rotor (1) befindlichen zylindermantelförmigen Luftspalt (9) wobei die Maschine als Außenläufermaschine ausgebildet, d.h. der Rotor außen angeordnet ist sowie mit mindestens einer integrierten schaltbaren Kupplung (3,4) zwischen Rotor und einer Kurbel- und/oder Getriebewelle zur Drehmomentübertragung,
**dadurch gekennzeichnet**,
daß die Kupplung (3 und/oder 4) innerhalb des innenliegenden Stators (2) angeordnet ist.

2. Elektrische Maschine nach Anspruch 1,
**dadurch gekennzeichnet**,
daß sie als Synchronmaschine mit elektronischer Kommutierung ausgebildet ist und daß der Rotor (1) mit einer Vielzahl von Permanentmagneten (12) bestückt ist.

3. Elektrische Maschine nach Anspruch 1 oder 2,
**dadurch gekennzeichnet**,
daß zwei Kupplungen (3,4) vorgesehen sind, die in axialer Richtung einander gegenüberliegend im Bereich der Stirnseiten des Stators (2) angeordnet sind.

4. Elektrische Maschine nach Anspruch 1 oder 2,
**dadurch gekennzeichnet**,
daß zwei Kupplungen (3, 4) vorgesehen sind, daß der Stator (2) eine im wesentlichen topfartige Gehäuseform aufweist und beide Kupplungen (3, 4) axial unmittelbar hintereinander in dem topfartigen Gehäuse angeordnet sind.

5. Elektrische Maschine nach einem der Ansprüche 1 bis 4,
**dadurch gekennzeichnet**,
daß die Kupplungen (3,4) elektrisch betätigt werden.

6. Elektrische Maschine nach einem der Ansprüche 1 bis 5,
**dadurch gekennzeichnet**,
daß die Betätigung der Kupplungen (3,4) automatisiert ist.

7. Elektrische Maschine nach Anspruch 5 oder 6,
**dadurch gekennzeichnet**,
daß die Kupplungen (3,4) als Magnetpulverkupplungen ausgebildet sind.

8. Elektrische Maschine nach einem der Ansprüche 1 bis 6,
**dadurch gekennzeichnet**,
daß die Kupplungen (3,4) als Lamellenkupplungen oder als hydraulisch oder pneumatisch betätigte Trockenkupplungen ausgebildet sind.

9. Elektrische Maschine nach Anspruch 8,
**dadurch gekennzeichnet**,
daß mindestens eine der Kupplungen (3, 4) mit Torsionsdämpfungselementen ausgestattet ist.

10. Elektrische Maschine nach einem der Ansprüche 1 bis 9,
**dadurch gekennzeichnet**,
daß die Kupplungen (3,4) in der Weise in dem Stator (2) integriert sind, daß sie in axialer Richtung nicht oder nur unwesentlich über die stirnseitige Kontur des Stators (2) und des Rotors (1) hinausragen.

11. Elektrische Maschine nach einem der Ansprüche 1 bis 10,
**dadurch gekennzeichnet**,
daß eine Flüssigkeitskühlung zur Abteitung der in der Maschine entstehenden Wärmeverluste vorgesehen ist.

12. Elektrische Maschine nach Anspruch 2 und Anspruch 4,
**dadurch gekennzeichnet**,
daß der Rotor (1) mit einem gehäuseartigen Nabenteil (1a) auf der der offenen Seite des topfartigen Statorgehäuses zugewandten Seite den Luftspalt (9) nach außen abdichtend übergreift, daß zwischen den Stirnseiten der Permanentmagnete (12) und dem gehäuseartigen Nabenteil (1a) mindestens ein Sammelraum (10) gebildet ist und die zum Luftspalt (9) hin dicht abgeschlossen sind, und daß in dem gehäuseartigen Nabenteil (1a) einzelne Öffnungen (11) zu dem mindestens einen Sammelraum (10) vorgesehen sind.

## Claims

1. An electric machine, which is able to be operated optionally as a motor and as a generator and in particular is able to be incorporated into the drive line of a motor vehicle with hybrid drive, with a stator (2) and a rotor (1) of substantially cylindrical shape and with an air gap (9) in the shape of a cylinder jacket situated between the stator (2) and rotor (1), in which the machine is constructed as an outside rotor machine, i.e. the rotor is arranged externally, and also with at least one integrated switchable clutch (3,4) between the rotor and a crankshaft and/or gear shaft, to transfer the torque,
characterised in that
the clutch (3 and/or 4) is arranged inside the stator (2) which lies on the inside.

2. An electric machine according to Claim 1,
characterised in that
it is constructed as a synchronous machine with electronic commutation and that the rotor (1) is equipped with a plurality of permanent magnets (12).

3. An electric machine according to Claim 1 or 2,
characterised in that
two clutches (3, 4) are provided which, lying opposite each other in axial direction, are arranged in the region of the front sides of the stator (2).

4. An electric machine according to Claim 1 or 2,
characterised in that
two clutches (3, 4) are provided, that the stator (2) has a substantially pot-like housing shape and both clutches (3, 4) are arranged axially immediately one after the other in the pot-like housing.

5. An electric machine according to one of Claims 1 to 4,
characterised in that
the clutches (3, 4) are actuated electrically.

6. An electric machine according to one of Claims 1 to 5,
characterised in that
the actuation of the clutches (3, 4) is automated.

7. An electric machine according to Claim 5 or 6,
characterised in that
the clutches (3, 4) are constructed as magnetic clutches.

8. An electric machine according to one of Claims 1 to 6,
characterised in that
the clutches (3, 4) are constructed as disc clutches or as dry clutches actuated hydraulically or pneumatically.

9. An electric machine according to Claim 8,
characterised in that
at least one of the clutches (3, 4) is equipped with torsion damping elements.

10. An electric machine according to one of Claims 1 to 9,
characterised in that
the clutches (3, 4) are integrated in the stator (2) such that they do not project in axial direction or only project to an insignificant extent over the contour, on the front side, of the stator (2) and of the rotor (1).

11. An electric machine according to one of Claims 1 to 10,
characterised in that
a liquid cooling is provided to draw off the thermal losses occuring in the machine.

12. An electric machine according to Claim 2 and Claim 4,
characterised in that
the rotor (1), with a housing-like hub part (1a) on the side facing the open side of the pot-like stator housing, engages over the air gap (9) in an externally sealing manner, that between the front faces of the permanent magnets (12) and the housing-like hub part (1a) at least one collection chamber (12) is formed, tightly sealed towards the air gap (9), and that in the housing-like hub part (1a) individual openings (11) are provided to the least one collection chamber (10).

## Revendications

1. Machine électrique, qui peut fonctionner, au choix, comme moteur et comme générateur, et peut être montée en particulier dans la ligne d'entraînement d'un véhicule automobile à entraînement hybride, comportant un stator (2) et un rotor (1) de forme essentiellement cylindrique et un entrefer (9) ayant la forme d'une enveloppe cylindrique se trouvant entre le stator (2) et le rotor (1), la machine étant réalisée comme machine à rotor externe, c'est-à-dire que le rotor est agencé extérieurement, ainsi qu'au moins un embrayage commutable intégré (3,4) entre le rotor et un arbre à manivelle et/ou arbre d'entraînement pour le transfert du couple,
caractérisée en ce que l'embrayage (3 et/ou 4) est agencé à l'intérieur du stator interne (2).

2. Machine électrique selon la revendication 1,
caractérisée en ce qu'elle est réalisée comme machine synchrone à commutation électronique et en ce que le rotor (1) est équipé d'une pluralité d'aimants permanents (12).

3. Machine électrique selon la revendication 1 ou 2,
caractérisée en ce que deux embrayages (3,4) sont prévus, qui sont agencés de façon opposée l'un à l'autre en direction axiale dans la zone des faces frontales du stator (2).

4. Machine électrique selon la revendication 1 ou 2,
caractérisée en ce que deux embrayages (3,4) sont prévus, en ce que le stator (2) présente une forme de carter généralement tronconique, et les deux embrayages (3,4) sont agencés axialement directement l'un derrière l'autre dans le carter de forme tronconique.

5. Machine électrique selon une des revendications 1 à 4,
caractérisée en ce que les embrayages (3,4) sont actionnés électriquement.

6. Machine électrique selon une des revendications 1 à 5,
caractérisée en ce que l'actionnement des embrayages (3,4) est automatisé.

7. Machine électrique selon la revendication 5 ou 6,
caractérisée en ce que les embrayages (3,4) sont réalisés sous forme d'embrayages à particules magnétiques.

8. Machine électrique selon une des revendications 1 à 6,
caractérisée en ce que les embrayages (3,4) sont réalisés sous forme d'embrayages à disques ou sous forme d'embrayages secs actionnés hydrauliquement ou pneumatiquement.

9. Machine électrique selon la revendication 8,
caractérisée en ce qu'au moins un des embrayages (3,4) est équipé d'éléments d'amortissement de torsion.

10. Machine électrique selon une des revendications 1 à 9,
caractérisée en ce que les embrayages (3,4) sont intégrés dans le stator (2) de façon qu'ils ne font pas saillie, ou uniquement de façon négligeable, en direction axiale au-dessus du contour frontal du stator (2) et du rotor (1).

11. Machine électrique selon une des revendications 1 à 10,
caractérisée en ce qu'un refroidissement par liquide est prévu pour évacuer les pertes thermiques engendrées dans la machine.

12. Machine électrique selon la revendication 2 et la revendication 4,
caractérisée en ce que le rotor (1), par une partie de moyeu (1a) du type carter, recouvre l'entrefer (9), avec étanchéification vers l'extérieur, sur le côté en regard du côté ouvert du carter du stator de forme tronconique, en ce que, entre les faces frontales des aimants permanents (12) et la partie de moyeu (1a) du type carter, il est formé au moins un espace de collecte (10), lesdits espaces étant fermés de façon étanche vers l'entrefer (9), et en ce que, dans la partie de moyeu (1a) du type carter, sont prévues des ouvertures individuelles (11) vers le ou lesdits espaces de collecte (10).
